# FASCICULE DE BREVET EUROPEEN

(11) **EP 2 252 770 B1**
(45) Date de publication et mention de la délivrance du brevet: **04.10.2017**
(21) Numéro de dépôt: 09721018.1
(22) Date de dépôt: 27.02.2009
(51) Int. Cl.: F01D 5/14

(54) **AUBE AVEC PLATEFORME NON AXISYMETRIQUE**
SCHAUFEL MIT NICHT-AXIALSYMMETRISCHER PLATTFORM
BLADE WITH NON-AXISYMMETRIC PLATFORM

(30) Priorité: 28.02.2008 FR 0851275
(43) Date de publication de la demande: 24.11.2010
(73) Titulaire: Snecma, 75015 Paris (FR)
(72) Inventeur: GUIMBARD, Jean-Michel, F-77930 Cély-en-Bière (FR); KUENY, Olivier, F-91230 Montgeron (FR); PINTAT, Ludovic, 94140 ALFORTVILLE (FR)
(74) Mandataire: Intès, Didier Gérard André
(86) Numéro de dépôt international: PCT/FR2009/050319
(87) Numéro de publication internationale: WO 2009/112776

(56) Documents cités:
- EP-A- 1 681 438
- EP-A1- 1 669 544
- US-A- 6 017 186
- US-A1- 2007 258 818

## Description

La présente invention concerne une aube pour roue à aubes de turbomachine telle que définie dans le préambule de la revendication 1. La réunion de telles aubes autour d'un axe commun permet de constituer une roue à aubes, dont l'axe est l'axe de la couronne. Cette roue à aubes peut être mobile et ainsi recevoir une énergie venant du flux ou communiquer une énergie au flux circulant à travers la roue à aube ; elle peut également être fixe, et dans ce cas là, son rôle est de canaliser le flux.

L'aube peut constituer une pièce distincte en elle-même, ou bien être intégrée avec d'autres aubes, pour former par exemple un secteur de distributeur ou un disque à aubes multiples.

Habituellement, une turbomachine comporte plusieurs étages d'aubes, chacun formant une roue, disposés successivement le long du parcours du fluide à travers la turbomachine (Il peut y avoir plusieurs parcours, notamment dans le cas de turboréacteurs double flux). Le rendement de la turbomachine est directement lié à la capacité de chacune des roues à aubes, et donc plus particulièrement de chacune des aubes qui en font partie, à interagir de manière efficace avec le flux, c'est-à-dire sans dissiper de l'énergie inutilement. On notera que notamment dans les turbomachines aéronautiques comme des turboréacteurs ou turbopropulseurs, les vitesses du flux peuvent être considérables, notamment supersoniques : pour une aube disposée dans un tel flux, il est essentiel d'optimiser la qualité d'écoulement du flux autour de l'aube.

Dans l'aube, la forme du profilé aérodynamique doit naturellement être optimisée, pour guider de manière efficace le flux dans lequel le profilé se trouve, ou encore pour recevoir ou pour transmettre le maximum d'énergie au flux sans dissiper d'énergie sous forme d'échauffement.

Toutefois, si la forme du profilé est importante, il est apparu que la forme de la surface de la plateforme du côté du profilé joue également un rôle essentiel pour la qualité de l'écoulement du flux à travers l'aube. Ainsi à titre d'exemple, les pertes dissipatives au niveau de cette surface dans un étage de turbine basse pression de turbomachine peuvent atteindre 30% des pertes totales générées dans l'étage.

Pour simplifier, dans ce qui suit, on désigne par surface de plateforme la surface de la plateforme du côté du profilé, sans répéter le côté duquel se trouve cette surface.

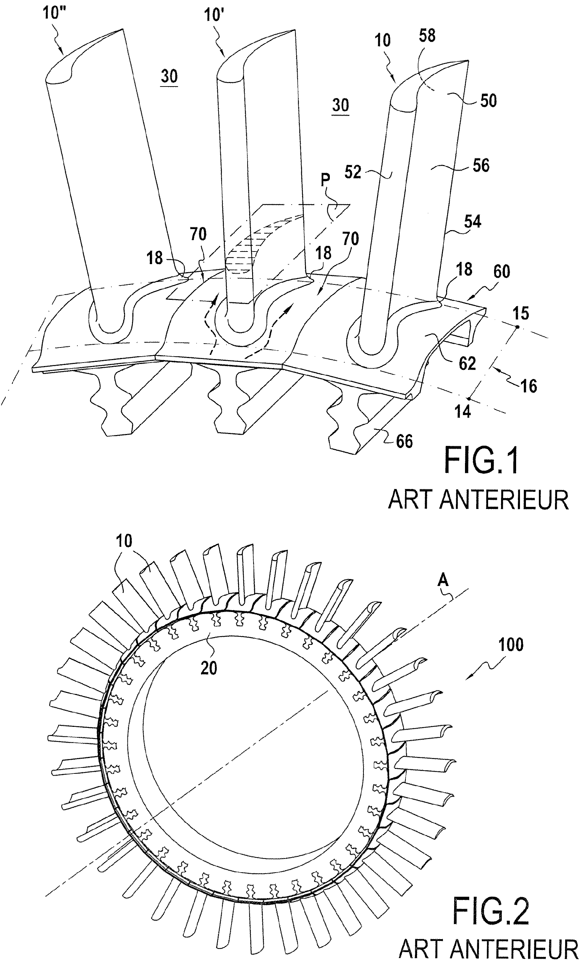

Le passage du flux autour des aubes telles que celles indiquées en préambule est illustré par les figures 1 et 2.

La figure 1 fait apparaître trois aubes 10 identiques faisant partie d'une roue à aubes 100 présentée en figure 2. Chaque aube 10 est conçue pour être assemblée avec d'autres aubes 10 identiques, pour former la roue à aubes 100. Cette roue est constituée essentiellement par les aubes 10 montées sur un disque rotor 20. Dans cette roue à aube 100, les aubes 10 sont montées de manière axisymétrique autour de l'axe A de la roue. Globalement, le flux de fluide s'écoule suivant l'axe A d'un côté amont à un côté aval de la roue.

Chaque aube 10 comprend un profilé aérodynamique 50, une plate-forme 60, ainsi qu'un pied 66 dans le cas particulier qui est représenté d'une aube de rotor, pour la fixation de l'aube sur un disque de rotor. La plate-forme 60 s'étend dans une direction globalement perpendiculaire à la direction longitudinale du profilé 50 et comporte une surface de plateforme 62 du côté du profilé. Comme les aubes 10 sont assemblées les unes contre les autres, leurs plateformes se rejoignent deux à deux de manière à créer une surface sensiblement continue dite surface 'inter-profilés' 70 s'étendant de l'intrados 56 d'un profilé à l'extrados 58 du profilé voisin. La surface de plateforme 62 est reliée aux surfaces extérieures du profilé 50 par des surfaces de raccordement 18 (qui sont sensiblement des congés de raccordement à rayon évolutif).

On notera de plus que dans les exemples représentés sur les figures 1 à 3, la surface 62 de la plateforme 60 est de révolution, c'est-à-dire que sa surface est sensiblement une partie d'une surface de révolution, autour de l'axe A de la roue à aube. Une surface de révolution autour d'un axe désigne ici une surface engendrée par la rotation d'une courbe autour dudit axe. Une telle forme est usuelle pour des surfaces de plateformes d'aubes pour roues à aubes de turbomachines.

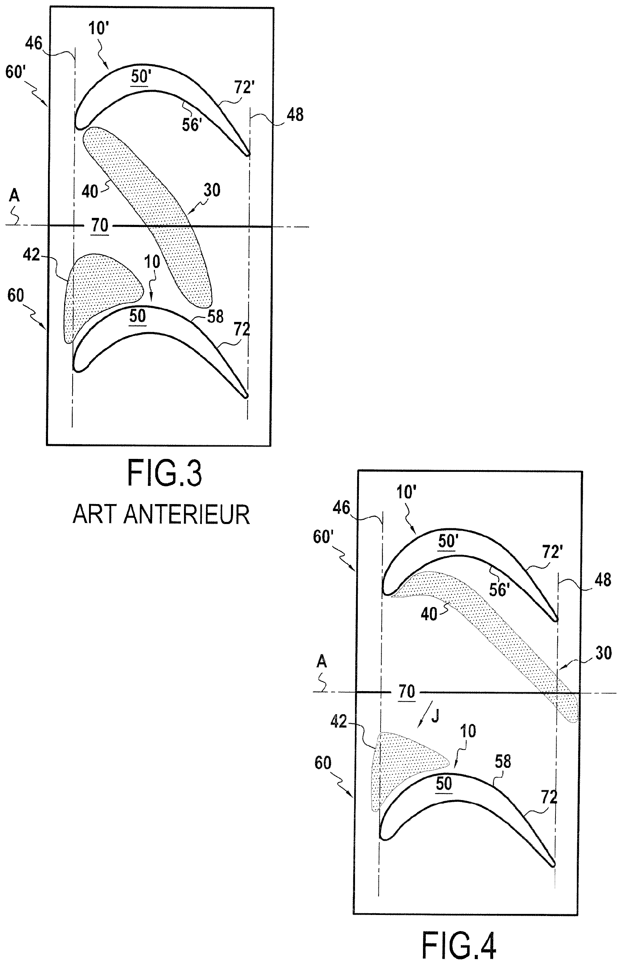

Dans l'écoulement, lorsque le flux arrive sur le bord d'attaque d'un profilé 50, il se scinde en deux passant en partie du côté de l'intrados 56 et en partie du côté de l'extrados 58 du profilé 50. La figure 3 présente de manière simplifiée la manière dont s'établit le champ de pression dans le 'canal inter-profilés' 30 s'étendant entre les profilés.

La figure 3 est une vue en coupe perpendiculairement à leurs axes respectifs des profilés de deux aubes 10 et 10' montées côte à côte dans une roue à aubes. Plus particulièrement, la figure 3 fait apparaître le champ de pression que l'on peut observer habituellement au voisinage de la surface inter-profilés 70 entre l'extrados 58 d'un premier profilé et l'intrados 56' d'un deuxième profilé.

La figure 3 comporte une courbe isopression 40 correspondant à une relativement haute pression et une courbe isopression 42 correspondant à une relativement basse pression, ces pressions étant observées dans le flux pendant le fonctionnement de la turbomachine. Un fort gradient de pression J est créé entre l'intrados et l'extrados des deux profilés du fait que la pression est bien plus grande au voisinage de l'intrados qu'au voisinage de l'extrados. Sous l'effet de ce gradient de pression J, un écoulement transversal au canal 'inter-profilés' 30 est généré au pied des profilés et les particules ainsi déviées sont poussées vers l'extrados du profilé 50. Ce phénomène crée au sein du canal 'inter-profilés' 30 de forts écoulements secondaires non dirigés dans le sens général de l'écoulement qui génèrent des tourbillons notamment au voisinage de l'extrados.

Pour tenter de limiter la dissipation inutile d'énergie qui en résulte au voisinage de la surface inter-profilés, le brevet U.S. 7 220 100 propose une forme de surface inter-profilés qui comporte principalement une rampe convexe située immédiatement au voisinage de l'intrados du profilé, et une zone concave située immédiatement au voisinage de l'extrados du profilé, chacune de ces zones se trouvant sensiblement au point médian de la corde du profilé. Malgré ce perfectionnement, il demeure certains tourbillons dissipateurs d'énergie dans l'espace entre les deux profilés, et il existe donc un besoin pour une forme d'aube qui réduise davantage les tourbillons parasites se formant dans cet espace.

Le brevet US 6283713 propose une autre forme pour la surface inter-profilés, comportant d'une part une région convexe adjacente à l'extrados de l'aube et une concave adjacente à l'intrados de l'aube, ces deux régions étant de taille significative car s'étendant sur une majeure partie de la longueur de corde de l'aube. Selon une alternative, l'aube comporte au niveau du bord de fuite, une bosse et un creux situés respectivement du côté de l'extrados et de l'intrados. Toutefois ces configurations de la surface inter-profilés ne permettent pas de résoudre efficacement le problème de la dissipation inutile d'énergie au voisinage de cette surface. Enfin, d'autres formes de surfaces interprofilés d'autres de turbines sont divulguées par les documents US 2007/258818 et EP 1681438.

Un premier objet de l'invention est de proposer une aube telle que celle présentée en préambule, qui minimise les dissipations inutiles d'énergie lors de l'interaction du flux avec l'aube, et reste de coût de revient faible en étant relativement facile à fabriquer.

Cet objectif est atteint grâce au fait que l'aube présente un profil d'extrados tel que décrit dans la revendication 1. Notons tout d'abord que par 'axialement', on fait référence ci-dessus ainsi que dans tout ce qui suit, à la position axiale suivant l'axe A de la couronne.

De plus, une position repérée axialement par rapport au profilé, doit se comprendre aussi, de manière équivalente, par rapport à l'étendue suivant l'axe A, d'une section transversale du profilé au voisinage de la plateforme de l'aube. En effet, comme le profilé est disposé radialement dans la couronne, son étendue suivant l'axe A, ou l'étendue d'une section transversale sont sensiblement identiques.

La section transversale du profilé peut être par exemple la section dans le plan (P) représentée sur la figure 1, et représentée par les profils 72 et 72' sur la figure 3. Cette section s'étend axialement de la ligne 46 au point le plus amont du profilé (au voisinage de la surface de plateforme), à la ligne 48 correspondant au point le plus aval du profilé, ce qui définit une amplitude de l'amont vers l'aval entre 0 et 100% par rapport au profilé.

D'autre part, il est important de noter que dans cette demande, l'indication qu'un élément est situé axialement dans un intervalle, sans plus de précision, signifie que l'essentiel, la majeure partie de cet élément (soit environ 90% ou 95% de cet élément) se trouve contenu dans cet intervalle, une très petite partie (au maximum 5 à 10%) pouvant se trouver hors de celui-ci. Inversement l'indication qu'un élément est situé principalement dans un intervalle, signifie seulement qu'au moins 50% de cet élément se trouve dans cet intervalle.

Enfin, au sens de l'invention un profil d'extrados situé le long de l'extrados est une courbe s'étendant à distance sensiblement constante de l'extrados, contre celui-ci ou à faible distance de celui-ci (typiquement à une distance inférieure à 20%, voire 10%, de la distance entre les profilés).

De préférence la première partie en creux est formée contre l'extrados, c'est-à-dire que le congé raccordant la surface d'extrados avec la surface de plateforme constitue directement, dans la partie amont de l'extrados, une portion de la partie en creux.

La partie en creux peut être relativement marquée, et ainsi par exemple présenter une profondeur en son point le plus creux, ou point bas, par rapport à la surface moyenne de la plateforme, qui soit supérieure à 4 ou 5% de la distance entre profilés.

Un avantage majeur de l'invention tient au fait que la forme particulière de surface de plateforme exposée précédemment permet une réduction significative des écoulements tourbillonnaires parasites entre les profilés au voisinage de la surface inter-profilés.

En effet, la présence sur le profil d'extrados de la première partie en creux suivie en aval par la première partie en bosse a pour conséquence qu'au voisinage de l'extrados, en partie amont (axialement) du profilé la vitesse du flux diminue alors que sa pression augmente, et inversement en aval de cette partie en bosse, la vitesse du flux augmente et la pression diminue afin de limiter les décollements de flux. Il s'ensuit une diminution du gradient de pression dans le canal inter-profilés et une réduction des tourbillons dissipateurs d'énergie parasites.

En outre, de préférence, la première partie en bosse est localisée dans la moitié aval du profilé.

Dans le présent document, les différents exemples utilisés présentent une aube ayant une plateforme située du côté central par rapport au profilé, dans la direction radiale, et non du côté extérieur. On notera à cet égard que l'invention vise tout autant une aube comportant une plateforme située en tête de profilé, c'est-à-dire du côté radialement opposé au centre de couronne, qu'une aube comportant une plateforme située en pied de profilé, du côté intérieur par rapport à la couronne. Une aube comportant à la fois les deux types de plateformes est également possible, avec au moins une plateforme agencée de manière à comporter une surface de plateforme ayant les caractéristiques énoncées précédemment.

D'autre part, l'invention vise toute aube apte à être intégrée dans une turbomachine, et particulièrement dans des turbomachines aéronautiques. L'aube selon l'invention s'avère particulièrement utile dans les étages de turbines, notamment de turbines basse pression.

Selon un mode de réalisation, des sections des surfaces de plateforme des aubes assemblées en couronne, au voisinage respectivement en amont et en aval des profilés, ces sections étant perpendiculaires à l'axe de couronne, définissent un cercle moyen amont et un cercle moyen aval, ces deux cercles définissant un cône coaxial à l'axe de couronne, ladite première partie en creux est en dépression par rapport au cône, et ladite première partie en bosse est en saillie par rapport au cône.

Les cercles moyens amont 14 et aval 15 apparaissent sur la figure 1. Ces cercles sont situés dans des plans perpendiculaires à l'axe de la couronne et sont les cercles moyens représentatifs des sections des surfaces de plateforme dans ces plans, en amont et en aval des profilés et au voisinage de ceux-ci. Le cône 16 est le cône qui passe par les deux cercles coaxiaux 14 et 15, et peut éventuellement être dégénéré en cylindre si les deux cercles sont de même rayon. Le plan P qui permet de définir la section sensiblement transversale du profilé utilisée comme référence, s'étend sensiblement perpendiculairement à une normale du cône 16 passant dans le profilé.

C'est lorsque les premières parties en creux et en bosse du profil d'extrados sont en dépression ou en saillie par rapport au cône que leur effet est le plus marqué.

Selon un mode de réalisation, la surface de plateforme présente une zone de révolution par rapport audit axe de couronne au voisinage du bord de fuite du profilé. La présence d'une zone de révolution au niveau du bord de fuite du profilé permet en coopérant avec la zone en bosse (en bosse dans le sens général d'écoulement du flux) de la surface de plateforme correspondant à la première partie en bosse du profil d'extrados, d'obtenir un écoulement très laminaire au niveau et en aval du bord de fuite. Cette zone de révolution permet en outre, pour cette partie de l'aube, minimiser les coûts de réalisation d'outillage et donc le coût de revient de l'aube.

Selon un mode de réalisation, un profil d'intrados en surface de la plateforme le long de l'intrados présente une deuxième partie en bosse, située axialement principalement dans la moitié amont du profilé. La présence de cette deuxième partie en bosse permet d'accélérer la vitesse d'écoulement à son niveau et de réduire la pression au voisinage de l'intrados. Grâce à cela le gradient de pression et les tourbillons dissipatifs parasites dans le canal inter-profilés peuvent être encore davantage réduits.

Avantageusement, ladite deuxième partie en bosse s'étend axialement sur plus des trois quarts du profilé, pour accentuer la vitesse d'écoulement sur la bosse et maximiser ainsi l'effet induit sur l'écoulement du flux.

Selon un mode de réalisation, un profil d'intrados de la surface de plateforme le long de l'intrados présente en outre une deuxième partie en creux située axialement principalement entre 60% et 100% du profilé, à partir de l'amont. La présence de cette deuxième partie en creux permet en effet d'améliorer encore le rendement de l'aube et de réduire les tourbillons dissipatifs, en stabilisant l'écoulement au voisinage de la partie aval de l'aube.

Selon un mode de réalisation, la surface de plateforme comporte en outre une zone de révolution du côté de l'intrados du profilé située axialement à environ 75% du profilé. Plus précisément, cette zone peut s'étendre entre 50% et 90% de la section de profilé citée précédemment. La partie des outillages de fabrication correspondant à cette zone est donc particulièrement facile à réaliser ce qui réduit d'autant le coût de revient de l'aube.

Plus particulièrement, cette zone de révolution s'étend depuis un bord inter-aubes de ladite plate-forme jusqu'à l'intrados du profilé. Le bord inter-aubes est ici un bord de la plateforme situé en vis-à-vis d'un autre bord de plateforme, lorsque les aubes sont assemblées en couronne.

Le mode de réalisation précédent permet de conserver un excellent rendement pour le dispositif, tout en réduisant les coûts de revient du dispositif, du fait de la présence de la zone de révolution indiquée.

Le recours à une forme de révolution au voisinage de la jonction entre une aube et l'aube voisine permet notamment de minimiser les effets de bord et les tourbillons parasites qui pourraient en résulter dans cette zone.

Selon un mode de réalisation, la plus grande partie de la surface inter-profilés est engendrée par le déplacement d'un segment de droite s'appuyant sur lesdits profils d'extrados et d'intrados. Ainsi, la surface inter-profilés présente une forme relativement simple, aérodynamiquement efficace, et dont le coût de réalisation reste modéré, ne posant pas de problème particulier de réalisation en fonderie.

Enfin, dans une aube selon l'invention, l'une au moins desdites parties en creux ou en bosse peut se prolonger ou s'étendre en amont ou en aval de la surface inter-profilés.

Un second objet de l'invention est de proposer un secteur de distributeur de turbomachine de rendement élevé, et dont le coût de revient reste modéré. Cet objectif est atteint grâce au fait que le secteur de distributeur de turbomachine comporte au moins une aube telle que celles définies précédemment.

Un troisième objet de l'invention est de proposer une roue à aubes de rendement élevé, et dont le coût de revient reste modéré. Cet objectif est atteint grâce au fait que la roue à aubes comporte une pluralité d'aubes telles que celles définies précédemment.

Un quatrième objet de l'invention est de proposer une turbomachine de rendement élevé, et dont le coût de revient reste modéré. Cet objectif est atteint grâce au fait que la turbomachine comprend au moins une roue à aubes telle que celle définie précédemment.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 déjà décrite est une vue en perspective de trois aubes connues disposées dans leur position relative telles que montées dans une roue à aubes,
- la figure 2 déjà décrite est une vue en perspective d'une roue à aubes comprenant les aubes de la figure 1,
- la figure 3 déjà décrite est une coupe perpendiculairement à l'axe des profilés de deux aubes représentées sur la figure 1, faisant apparaître les champs de pression dans l'espace séparant les deux profilés ;
- la figure 4 est une coupe similaire à la coupe de la figure 3, mais de deux profilés faisant partie d'aubes conformes à l'invention ;
- la figure 5 est une vue en coupe perpendiculairement à l'axe des profilés de deux profilés d'aubes conformes à l'invention,
- la figure 6 est une vue latérale partielle d'une aube selon l'invention, présentant les courbes de profils respectivement le long de l'extrados et le long de l'intrados, dans une aube selon l'invention ;
- les figures 7 et 8 sont les coupes de deux profilés de deux aubes selon l'invention, faisant apparaître par des courbes de niveau la forme de la surface inter-profilés, dans deux modes de réalisation différents ; et
- la figure 9 est une coupe sensiblement perpendiculaire à l'axe de couronne, du canal inter-profilés entre deux aubes selon l'invention.

On notera que par souci de simplification, lorsqu'un élément apparaît sur différentes figures, à l'identique ou sous une forme peu différente, un même numéro lui est attribué sur les différentes figures et l'élément n'est décrit que la première fois où il est mentionné.

En faisant référence à la figure 4, l'effet produit sur le champ de pression dans le canal inter-profilés par une aube selon l'invention va maintenant être décrit.

La présente invention définit une forme de surface de plateforme qui permet de minimiser les phénomènes tourbillonnaires parasites au voisinage de la surface inter-profilés et ainsi d'augmenter le rendement de l'aube et donc de la roue à aube. La comparaison entre les figures 3 et 4 montre l'effet relatif de l'invention sur le champ de pression dans le canal inter-profilés 30 que permet d'obtenir la forme spécifique d'une aube selon l'invention.

Alors que sur la figure 3, les zones 40, 42 de forte et de basse pression respectivement sont relativement proches l'une de l'autre, dans la figure 4, on peut observer que celles-ci sont plus éloignées l'une de l'autre. Par voie de conséquence, le gradient de pression est sensiblement réduit, ainsi que la tendance des particules à migrer de l'intrados vers l'extrados en provoquant des tourbillons parasites.

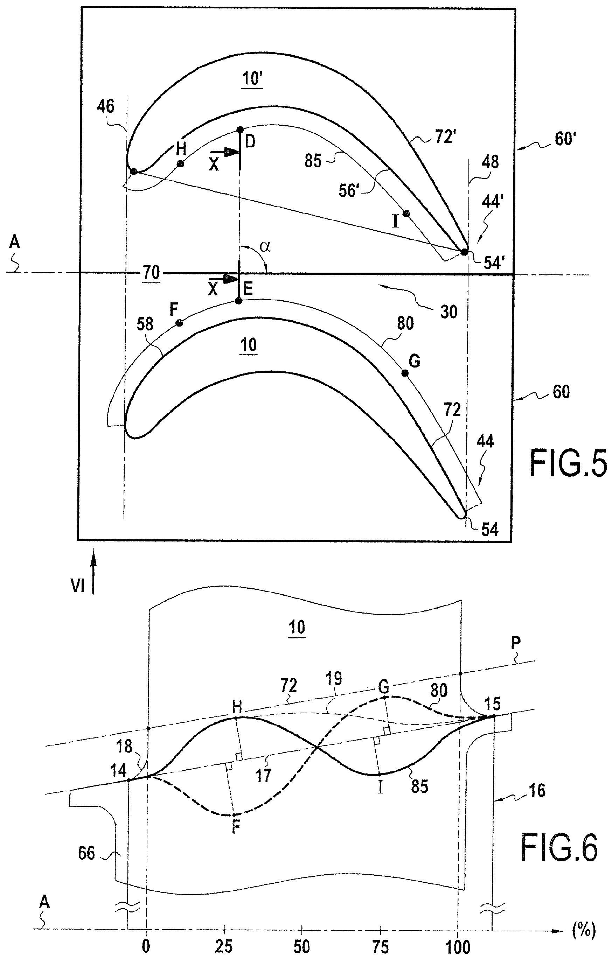

En faisant référence aux figures 5 à 9, l'agencement d'une aube selon l'invention va maintenant être décrit.

La figure 5 fait apparaître les sections 72 et 72' respectivement des deux aubes 10 et 10' dans une vue suivant l'axe longitudinal de ces deux profilés. Comme le montre la figure 6 la section 72 (comme la section identique 72') est l'intersection du profilé 50 avec un plan P, établie au voisinage de la plateforme 60 de l'aube 10, à une distance de la plateforme suffisante pour que la section soit bien celle du profilé 50 sans faire apparaître les surfaces de raccordement 18 entre le profilé 50 et la plateforme 60.

La figure 5 fait apparaître en outre des profils 80 et 85 de la surface de plateforme 62 d'une aube selon l'invention.

Les profils 80 et 85 sont des profils d'extrados et d'intrados, relevés respectivement le long de l'extrados et de l'intrados. En d'autres termes, ce sont des courbes passant sur la surface de plateforme, à distance sensiblement constante respectivement de l'extrados et de l'intrados.

De préférence ces profils sont relevés au voisinage du profilé, soit tout contre le profilé, soit à l'extérieur de la zone de raccordement entre le profilé et la surface de plateforme 62. Lorsque les profils sont relevés à une certaine distance du profilé, cela signifie que les formes (creux et bosses) qu'ils présentent sont formés à l'intérieur du canal inter-profilés, et non seulement sur un côté de celui-ci. Dans cette conformation, l'effet des reliefs correspondants aux creux et bosses du profil est accentué.

La figure 6 présente la partie de l'aube située au voisinage de sa plateforme 60, en vue de côté (repère VI sur la figure 5). Cette figure fait apparaître les points de passage des cercles moyens en amont 14 et en aval 15 du profilé, ainsi que la section 17 du cône 16 passant par ces deux cercles.

Le profil d'extrados 80 comporte tout d'abord une première partie en creux, concave, F, s'étendant axialement à l'intérieur de la moitié amont du profilé 72. Cette partie du profil 80 est du côté opposé au côté du flux par rapport à la section 17 du cône, c'est-à-dire en dépression par rapport au cône ou à la surface du cône. Le profil 80 comporte de plus une première partie en bosse, convexe, G, s'étendant axialement en moitié aval du profilé 72. Cette partie du profil 80 est du côté du flux par rapport à la section 17 du cône, et donc en saillie par rapport au cône.

Ainsi, le profil d'extrados 80 de la surface inter-profilés 70 fait apparaître tout d'abord une première partie en creux F suivie par une première partie en bosse G. Plus précisément, la première partie en creux (F) est située axialement entre 0 et 40% du profilé, et la première partie en bosse est située axialement entre 40 et 80% du profilé.

Avantageusement, le point bas (c'est-à-dire le plus près de l'axe) de la première partie en creux (F) est situé entre 12 % et 35% du profilé (50), et de préférence entre 15% et 25% du profilé à partir de l'amont.

Le profil d'intrados présente une configuration relativement inversée, avec une deuxième partie en bosse, H, située axialement principalement dans la moitié amont de la section du profilé 72, et une deuxième partie en creux, I, située axialement dans la moitié aval de la section 72 du profilé.

Les différentes parties en creux ou en bosse sont respectivement en dépression et en saillie par rapport au cône 16.

La deuxième partie en bosse est située axialement entre 0 et 50% du profilé (voire entre 0 et 60% du profilé), et la deuxième partie en creux est située axialement en aval de celle-ci, entre 60 et 100% du profilé.

Dans un autre mode de réalisation, le profil d'intrados ne présente pas de minimum dans sa moitié aval, et reste sensiblement entièrement du côté du profilé par rapport au cône. Cette variante est figurée par le pointillé 19 sur la figure 6. Dans ce mode de réalisation, le profil d'intrados s'étend essentiellement du côté du flux par rapport au cône 16 car il est formé principalement par la partie en bosse H, qui s'étend axialement sur plus des trois-quarts du profilé (plus précisément, le projeté sur l'axe A de la partie en bosse, a une étendue supérieure aux trois quarts de l'étendue de la projection sur l'axe A de la section transversale du profilé).

Dans ce mode de réalisation, le profil d'intrados ne présente alors pas de partie en creux, la partie en bosse venant se raccorder directement sur la partie (généralement de révolution) de profil au niveau du bord de fuite.

On notera en outre que les profils 80 et 85 se terminent sensiblement tangentiellement au cône, au voisinage du bord de fuite. Cela est du au fait que la surface de plateforme 62 comporte une zone de révolution 44' s'étendant au voisinage du bord de fuite.

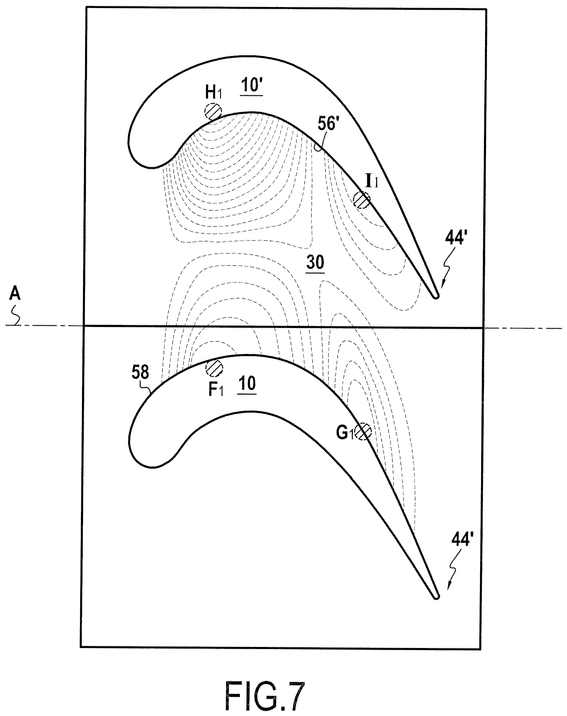

La figure 7 fait apparaître sous forme de courbes de niveau les formes de la surface inter-profilés 70 entre les deux contours 72 et 72' précédemment présentés en relation avec la figure 5. La surface inter-profilés 70 présente ainsi au voisinage de l'extrados 58, un premier creux ou une première dépression F1 correspondant à la première partie en creux F du profil d'extrados 80, située dans la partie amont du canal inter-profilés, et un premier sommet G1 correspondant à la première partie en bosse G du profil d'extrados, situé dans la partie aval du canal inter-profilés 30. Elle présente de plus au voisinage de l'intrados 56', un deuxième sommet H1 correspondant à la deuxième partie en bosse H du profil d'intrados 85, située dans la partie amont du canal inter-profilés, et un deuxième creux ou une deuxième dépression I1 correspondant à la deuxième partie en bosse I du profil d'intrados 85, situé dans la partie aval du canal inter-profilés 30.

Le premier maximum G1 et le deuxième minimum I1 se trouvent sensiblement en amont du bord de fuite de manière à ménager une zone de révolution 44' au voisinage de ce dernier.

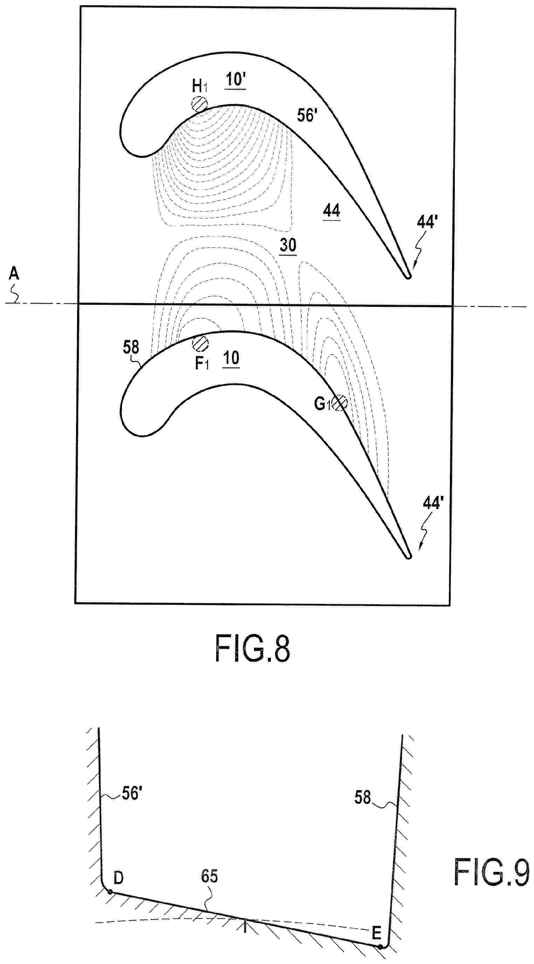

Sur la figure 8 est présentée une variante du mode de réalisation précédent, dans laquelle la deuxième dépression I1 n'est pas formée. Une pente douce relie de manière continue le sommet H1 avec la zone de révolution 44, s'étendant au voisinage de l'intrados et située axialement sensiblement aux trois quarts du profilé.

Sur les figures 7 et 8, les extremums locaux de la surface inter-profilés (par rapport à la direction perpendiculaire au cône précité) sont placés sensiblement contre la paroi du profilé. On notera que cette disposition n'est pas indispensable, lesdits extremums pouvant être décalés de la paroi du profilé, voire le cas échéant être séparés de celle-ci par un épaulement en saillie ou en dépression.

Sur la figure 9, on a fait apparaître un mode particulièrement avantageux de réalisation de l'invention dans lequel la plus grande partie de la surface inter-profilés 70 est engendrée par le déplacement d'un segment de droite 65 le long des deux profils 80 et 85 présentés sur la figure 5. Naturellement, les extrémités du segment se déplacent dans le même sens, par exemple de l'amont vers l'aval de l'aube, le long des deux profils d'intrados et d'extrados.

On notera en outre qu'il est préférable que le segment de droite 65 fasse un angle α valant typiquement 90°±30° (soit 60° à 120°) par rapport à l'axe A.

La figure 9 représente ce segment 65 en position confondue avec le segment DE représenté sur la figure 5. L'angle α par rapport à l'axe A vaut alors 90°. La section de la surface de révolution passant par le milieu du segment DE est figurée en pointillés. Les décalages radiaux des points D et E respectivement vers l'extérieur et vers le centre (vers le haut et vers le bas sur la figure) correspondent respectivement à la première partie en creux du profil d'extrados, en E, et à la deuxième partie en bosse sur le profil d'intrados, en D.

Comme le montre la figure 9, la première partie en creux est formée contre l'extrados ; elle s'étend jusqu'à l'extrados, et son point le plus marqué est situé tout près de l'extrados, sensiblement à la limite du congé de raccordement entre la surface d'extrados et la surface de plateforme. Sur la partie droite de la figure, on constate ainsi que le congé raccordant la surface d'extrados avec la surface de plateforme constitue une portion de la partie en creux.

## Revendications

1. Aube (10) pour roue à aubes (100) de turbomachine comportant
un profilé aérodynamique (50) formé avec un intrados (56), un extrados (58), un bord de fuite (54) et un bord d'attaque (52),
l'aube comportant en outre
une plateforme (60) s'étendant à l'une des extrémités du profilé dans une direction globablement perpendiculaire à une direction longitudinale du profilé,
l'aube (10) étant apte à être disposée avec une pluralité d'aubes sensiblement identiques pour former une couronne autour d'un axe de couronne (A) et définir suivant celui-ci des directions amont et aval, couronne dans laquelle les profilés sont disposés sensiblement radialement,
ladite aube comprenant un profil (80), dit 'profil d'extrados' constitué par une courbe s'étendant le long de l'extrados (58) en surface de la plateforme (60), à distance constante de l'extrados et contre celui-ci ou à une distance de celui-ci inférieure à 20% de la distance entre profilés, et présentant une première partie en creux (F) et une première partie en bosse (G), située axialement en aval de ladite première partie en creux,
l'aube étant **caractérisée en ce que** ladite première partie en creux (F) est située axialement dans une moitié amont du profilé (50), de telle sorte qu'au moins 90% de ladite première partie en creux (F) se trouve contenu dans la moitié amont du profilé (50).

2. Aube selon la revendication 1, **caractérisée en ce que**, lorsque l'aube est montée dans ladite roue à aubes,
des sections des surfaces de plateforme des aubes assemblées en couronne, au voisinage respectivement en amont et en aval des profilés, ces sections étant perpendiculaires à l'axe de couronne (A), définissent un cercle moyen amont (14) et un cercle moyen aval (15), ces deux cercles définissant un cône (16) coaxial à l'axe de couronne (A),
ladite première partie en creux (F) est en dépression par rapport au cône, et
ladite première partie en bosse (G) est en saillie par rapport au cône.

3. Aube selon la revendication 1 ou 2, dans laquelle un profil d'intrados (85) en surface de la plateforme (60) le long de l'intrados présente une deuxième partie en bosse (H), située axialement principalement dans la moitié amont du profilé (50).

4. Aube selon la revendication 3, dans laquelle ladite deuxième partie en bosse s'étend axialement sur plus des trois quarts du profilé (50).

5. Aube selon la revendication 3, dans laquelle la deuxième partie en bosse est située axialement entre 0 et 50% du profilé.

6. Aube selon l'une quelconque des revendications 1 à 5, dans laquelle la première partie en creux (F) est située axialement entre 0 et 40% du profilé (50).

7. Aube selon l'une quelconque des revendications 1 à 6, dans laquelle un point bas de la première partie en creux (F) est situé axialement entre 12 % et 35% du profilé (50).

8. Aube selon l'une quelconque des revendications 1 à 7, dans laquelle la première partie en bosse est située axialement entre 40 et 80% du profilé (50).

9. Aube selon l'une quelconque des revendications 1 à 8, dans laquelle un profil d'intrados (85) de la surface de plateforme (62) le long de l'intrados présente en outre une deuxième partie en creux (I) située axialement entre 60% et 100% du profilé.

10. Aube selon l'une quelconque des revendications 1 à 9, dont la surface de plateforme (62) comporte en outre une zone de révolution (44) du côté de l'intrados du profilé située axialement à environ 75% du profilé.

11. Aube selon la revendication 10, dans laquelle ladite zone de révolution s'étend depuis un bord inter-aubes de ladite plate-forme (60) jusqu'à l'intrados du profilé (50).

12. Aube selon l'une quelconque des revendications 1 à 11, dans laquelle la surface de plateforme (62) présente une zone de révolution (44) par rapport audit axe de couronne (A) au voisinage du bord de fuite (54,54') du profilé (50).

13. Aube selon l'une quelconque des revendications 1 à 12, **caractérisée en ce que**, lorsque l'aube est montée dans ladite roue à aubes, les portions adjacentes des surfaces de plateforme (62) de deux aubes adjacentes (10,10') situées entre leurs profilés (50) respectifs définissant une surface inter-profilés, la plus grande partie de la surface inter-profilés est engendrée par le déplacement d'un segment de droite s'appuyant sur lesdits profils (80,85) d'extrados et d'intrados.

14. Turbomachine comportant au moins une roue à aubes comprenant au moins une aube selon l'une quelconque des revendications 1 à 13.

## Patentansprüche

1. Schaufel (10) für ein Schaufelrad (100) einer Turbomaschine, umfassend
ein aerodynamisches Profil (50), das mit einer Vorderseite (56), einer Rückseite (58), einer Austrittskante (54) und einer Eintrittskante (52) ausgebildet ist,
wobei die Schaufel ferner umfasst
eine Plattform (60), die sich an einem der Enden des Profils in einer zu einer Längsrichtung des Profils insgesamt senkrechten Richtung erstreckt,
wobei die Schaufel (10) geeignet ist, mit einer Vielzahl von im Wesentlichen identischen Schaufeln angeordnet zu werden, um einen Kranz um eine Kranzachse (A) zu bilden und entlang dieser stromaufwärtige und stromabwärtige Richtungen zu definieren, Kranz, bei dem die Profile im Wesentlichen radial angeordnet sind,
wobei die Schaufel ein Profil (80), sogenanntes "Rückseitenprofil" aufweist, das durch eine Kurve gebildet ist, die sich entlang der Rückseite (58) an der Oberfläche der Plattform (60) in konstantem Abstand von der Rückseite und an dieser oder in einem Abstand von dieser, der geringer als 20 % des Zwischenprofilabstandes ist, erstreckt und die einen ersten vertieften Teil (F) und einen ersten erhabenen Teil (G), welcher axial stromabwärts des ersten vertieften Teils gelegen ist, aufweist,
wobei die Schaufel **dadurch gekennzeichnet ist, dass** der erste vertiefte Teil (F) axial in einer stromaufwärtigen Hälfte des Profils (50) gelegen ist, derart, dass wenigstens 90 % des ersten vertieften Teils (F) in der stromaufwärtigen Hälfte des Profils (50) enthalten ist.

2. Schaufel nach Anspruch 1, **dadurch gekennzeichnet, dass** wenn die Schaufel in dem Schaufelrad angebracht ist,
Abschnitte der Plattformflächen der zu einem Kranz zusammengesetzten Schaufeln, in der Nähe stromaufwärts bzw. stromabwärts der Profile, wobei diese Abschnitte zu der Kranzachse (A) senkrecht verlaufen, einen stromaufwärtigen mittleren Kreis (14) und einen stromabwärtigen mittleren Kreis (15) definieren, wobei diese beiden Kreise einen zu der Kranzachse (A) koaxialen Kegel (16) definieren,
der erste vertiefte Teil (F) gegenüber dem Kegel abgesenkt ist, und
der erste erhabene Teil (G) gegenüber dem Kegel vorspringend ist.

3. Schaufel nach Anspruch 1 oder 2, bei der ein Vorderseitenprofil (85) an der Oberfläche der Plattform (60) entlang der Vorderseite einen zweiten erhabenen Teil (H), welcher axial hauptsächlich in der stromaufwärtigen Hälfte des Profils (50) gelegen ist, aufweist.

4. Schaufel nach Anspruch 3, bei der der zweite erhabene Teil sich axial über mehr als drei Viertel des Profils (50) erstreckt.

5. Schaufel nach Anspruch 3, bei der der zweite erhabene Teil axial zwischen 0 und 50 % des Profils gelegen ist.

6. Schaufel nach einem der Ansprüche 1 bis 5, bei der der erste vertiefte Teil (F) axial zwischen 0 und 40 % des Profils (50) gelegen ist.

7. Schaufel nach einem der Ansprüche 1 bis 6, bei der ein unterer Punkt des ersten vertieften Teils (F) axial zwischen 12 % und 35 % des Profils (50) gelegen ist.

8. Schaufel nach einem der Ansprüche 1 bis 7, bei der der erste erhabene Teil axial zwischen 40 und 80 % des Profils (50) gelegen ist.

9. Schaufel nach einem der Ansprüche 1 bis 8, bei der ein Vorderseitenprofil (85) der Plattformfläche (62) entlang der Vorderseite ferner einen zweiten vertieften Teil (I), welcher axial zwischen 60 % und 100 % des Profils gelegen ist, aufweist.

10. Schaufel nach einem der Ansprüche 1 bis 9, deren Plattformfläche (62) ferner einen Rotationsbereich (44) auf der Seite der Vorderseite des Profils, der axial bei etwa 75 % des Profils gelegen ist, aufweist.

11. Schaufel nach Anspruch 10, bei der der Rotationsbereich sich von einer Zwischenschaufelkante der Plattform (60) bis zu der Vorderseite des Profils (50) erstreckt.

12. Schaufel nach einem der Ansprüche 1 bis 11, bei der die Plattformfläche (62) einen Rotationsbereich (44) gegenüber der Kranzachse (A) in der Nähe der Austrittskante (54, 54') des Profils (50) aufweist.

13. Schaufel nach einem der Ansprüche 1 bis 12, **dadurch gekennzeichnet, dass** wenn die Schaufel in dem Schaufelrad angebracht ist, wobei die aneinandergrenzenden Abschnitte der Plattformflächen (62) von zwei aneinandergrenzenden Schaufeln (10, 10'), die zwischen ihren jeweiligen Profilen (50) gelegen sind, eine Zwischenprofilfläche definieren, der größte Teil der Zwischenprofilfläche durch die Verschiebung eines Geradensegments, das sich auf die Rückseiten- und Vorderseitenprofile (80, 85) stützt, erzeugt wird.

14. Turbomaschine, die wenigstens ein Schaufelrad mit wenigstens einer Schaufel nach einem der Ansprüche 1 bis 13 umfasst.

## Claims

1. A blade (10) for a turbomachine impeller (100) comprising
an airfoil (50) formed with a pressure surface (56), a suction surface (58), a trailing edge (54) and a leading edge (52),
the blade further comprising
a platform (60) extending at one of the ends of the airfoil in a direction globally perpendicular to a longitudinal direction of the airfoil,
the blade (10) being adapted to be arranged with a plurality of substantially identical blades to form a ring around a ring axis (A) and define therealong upstream and downstream directions, with the ring having the airfoils arranged substantially radially therein,
said blade comprising a profile (80), called 'suction surface profile', constituted by a curve extending along the suction surface (58) at the surface of the platform (60), at a constant distance of the suction surface and against the latter or at a distance of the latter less than 20% of the distance between airfoils, and having a first recessed part (F) and a first boss-like part (G), located axially downstream of said first recessed part,
the blade being **characterized in that** said first recessed part (F) is located axially in an upstream half of the airfoil (50), so that at least 90% of said first recessed part (F) is contained in the upstream half of the airfoil (50).

2. The blade according to claim 1, **characterized in that**, when the blade is mounted in said impeller,
sections of the platform surfaces of the blades assembled into a ring, respectively close to the upstream and downstream of the airfoils, with the sections being perpendicular to the ring axis (A), define an upstream median circle (14) and a downstream median circle (15), with these two circles defining a cone (16) coaxial with the ring axis (A),
said first recessed part (F) is depressed with respect to the cone, and
said first boss-like part (G) is protruding with respect to the cone.

3. The blade according to claim 1 or 2, wherein a pressure surface profile (85) at the surface of the platform (60) along the pressure surface has a second boss-like part (H), located axially mainly in the upstream half of the airfoil (50).

4. The blade according to claim 3, wherein said second boss-like part is axially extending over more than three quarters of the airfoil (50).

5. The blade according to claim 3, wherein the second boss-like part is located axially between 0 and 50 % of the airfoil.

6. The blade according to any of claims 1 to 5, wherein the first recessed part (F) is located axially between 0 and 40 % of the airfoil (50).

7. The blade according to any of claims 1 to 6, wherein a bottom point of the first recessed part (F) is located axially between 12 % and 35 % of the airfoil (50).

8. The blade according to any of claims 1 to 7, wherein the first boss-like part is located axially between 40 and 80% of the airfoil (50).

9. The blade according to any of claims 1 to 8, wherein a pressure surface profile (85) of the platform surface (62) along the pressure surface further has a second recessed part (I) situated axially between 60 % and 100 % of the airfoil.

10. According to any of claims 1 to 9, wherein the platform surface (62) further comprises an area of revolution (44) on the side of the pressure surface of the airfoil located axially at about 75 % of the airfoil.

11. The blade according to claim 10, wherein said area of revolution extends from an inter-blade edge of said platform (60) to the pressure surface of the airfoil (50).

12. The blade according to any of claims 1 to 11, wherein the platform surface (62) has an area of revolution (44) with respect to said ring axis (A) close to the trailing edge (54, 54') of the airfoil (50).

13. The blade according to any of claims 1 to 12, **characterized in that**, when the blade is mounted in said impeller,
the portions adjacent to the platform surfaces (62) of two adjacent blades (10, 10') located between their respective airfoils (50) define an inter-airfoil surface, most of the inter-airfoil surface being generated by moving a line segment based on said suction surface and pressure surface profiles (80, 85).

14. A turbomachine comprising at least one impeller comprising at least one blade according to any of claims 1 to 13.
